# EUROPÄISCHE PATENTSCHRIFT

(11) **EP 1 583 941 B1**
(45) Veröffentlichungstag und Bekanntmachung des Hinweises auf die Patenterteilung: **28.12.2011**
(21) Anmeldenummer: 04702620.8
(22) Anmeldetag: 16.01.2004
(51) Int. Cl.: G01L 1/16, G01L 5/10

(54) **VORSPANNELEMENT FÜR SENSOREN**
PRESTRESSING ELEMENT FOR SENSORS
ELEMENT DE PRECONTRAINTE POUR DES CAPTEURS

(30) Priorität: 17.01.2003 CH 65032003
(43) Veröffentlichungstag der Anmeldung: 12.10.2005
(73) Patentinhaber: Kistler Holding AG, 8408 Winterthur (CH)
(72) Erfinder: TSCHANZ, Peter, CH-8500 Gerlikon (CH)
(86) Internationale Anmeldenummer: PCT/CH2004/000020
(87) Internationale Veröffentlichungsnummer: WO 2004/065924

(56) Entgegenhaltungen:
- WO-A1-96/20046
- WO-A1-96/20046
- US-A- 4 342 233

## Beschreibung

Die Erfindung betrifft ein Vorspannelement zum Anbringen einer Vorspannung auf einen Messsensor zwischen Strukturen oder in einer Aussparung einer Struktur.

Kraftsensoren werden für den Einsatz in vielen Anwendungen unter mechanische Vorspannung gesetzt. Beispiele solcher Anwendungen sind Messungen innerhalb mechanischer Strukturen wie Walzen oder andere Maschinenelemente, auf die eine Kraft einwirkt. Solche Vorspannungen sind einerseits notwendig, um die Sensoren am Ort zu halten und um ein Spiel auszuschliessen. Andererseits sollen sie gewährleisten, dass die Sensoren in ihrem linearen Messbereich zum Einsatz kommen, auch bei Temperaturschwankungen.

Vorspannelemente für solche Zwecke sind bereits bekannt. In der EP 0433535 wird eine Messanordnung mit einem verstellbaren Keil angegeben, der mittels einer Schraube das Messelement in eine gewünschte Vorspannung bringt. Zum Lösen der Vorspannung werden zwei weitere Schrauben verwendet, die den Keil wieder zurück bringen.

Die EP 0719405 verwendet ebenfalls einen Keil zum Vorspannen des Sensors. Dieser Keil ist im Sensor integriert. Allerdings ist für diese Anordnung das Vorhandensein paralleler Flächen erforderlich. Zum Lösen der Vorspannung werden ebenfalls zwei weitere Schrauben verwendet, um den Keil wieder zurück zu bringen.

In der EP 0806643 wird die gewünschte Vorspannung mittels einer durch alle Sensoren durchgehenden Schraube erzeugt. Der Nachteil dieser Vorrichtung besteht darin, dass die Schraube in Kraftflussrichtung verläuft, wodurch ein Fehler in der Messung entstehen kann.

Interessant an dieser Vorrichtung ist allerdings die Verwendung zweier annähernd gleicher aber entgegengesetzt angeordneter Sensoren. Eine durch eine Temperaturänderung verursachte Änderung der Vorspannung erzeugt dieselbe Abweichung an beiden Sensoren. Die Hälfte der Differenz der jeweils gemessenen Werte diester beiden Sensoren entspricht bei jeder Temperatur dem gewünschten Wert der einwirkenden Kraft an jedem Sensor. Eine derartige Kompensation ist wichtig, wenn die zu messende Struktur grossen Temperaturdifferenzen unterworfen ist, wie dies beispielsweise bei Walzen der Fall ist.

Ein anderer Vorspannmechanismus, beispielsweise der in der DE 20119194 U1 beschriebene, verlangt eine Durchbohrung der Oberfläche des Maschinenteils, beispielsweise der Walze. Eine Zerstörung der Oberfläche ist aber in vielen falle nicht möglich oder nicht erwünscht .

In der EP 1048370 wird ebenfalls eine Durchbohrung der Oberfläche einer Walze notwendig, um die Sensoren anzubringen.

In der WO 96/20046 wird ein ringförmiger Signalumwandler beschrieben mit einer Vielzahl von piezoelektrischen Elementen, die mit zusätzlichen Keilen unter Vorspannung gebracht werden, indem diese mit Schrauben verspannt werden. Ein Lösen der Vorspannung ist aber nicht beschrieben. Es wird vorgeschlagen, einen durch die Vorspannung entstandene Zwischenraum mit einem Füllstoff zu füllen, um ein Lösen der Vorspannung zu verhindern.

Aufgabe der vorliegenden Erfindung ist es, eine Vorspannvorrichtung für Sensoren anzugeben, die auch in nicht parallelen Flächen wie Rundungen eingesetzt werden kann und die Kraftstruktur nicht unterbricht. Die Vorspannvorrichtung soll sich auch zum Vorspannen mehrerer Sensoren in einer Reihe eignen, wobei jeder Sensor individuell vorgespannt und gelöst werden soll und wobei der Zugang nur in axialer Richtung, also in Richtung der Reihenanordnung, möglich ist. Dies kann erforderlich sein, wenn die Leiste in eine Bohrung, beispielsweise die eine Walze, eingeführt werden soll.

Eine weitere Aufgabe der vorliegenden Erfindung steht in der Anforderung, einen Sensor mit Vorspannvorrichtung anzugeben, der in ein Maschinenteil eingebaut werden kann, ohne die Oberfläche des Maschinenteils durchbohren zu müssen.

Diese Aufgabe wird gelöst durch den kennzeichnenden Teil des ersten Patentanspruches.

Die Erfindung wird unter Verwendung der folgenden Zeichnungen erläutert. Es zeigen
- Fig. 1: den Stand der Technik, in
a Aufsicht
b Seitenansicht
- Fig. 2: eine erfindungsgemässe Ausführungsform einer Vorspannvorrichtung für einen Sensor in
- a: Seitenansicht
- b: Frontalansicht
- Fig. 3: ein weiteres Anwendungsbeispiel einer erfindungsgemässen Vorspannvorrichtung in Aufsicht
- Fig. 4: ein weiteres Anwendungsbeispiel einer erfindungsgemässen Vorspannvorrichtung in Aufsicht
- Fig. 5: Schemazeichnungen verschiedener alternativer Varianten
- Fig. 6: eine erfindungsgemässe Ausführung einer Anordnung mehrerer Sensoren auf einer Leiste in perspektivischer Ansicht
- Fig. 7: eine Montageanordnung einer Anordnung mehrerer Sensoren auf einer Leiste in perspektivischer Ansicht
- Fig. 8: Einen Querschnitt einer Montageanordnung mehrerer Sensorleisten in einer Walze
- Fig. 9: Einen Längsschnitt eines weiteren Anwendungsbeispieles einer erfindungsgemässen Vorspannvorrichtung

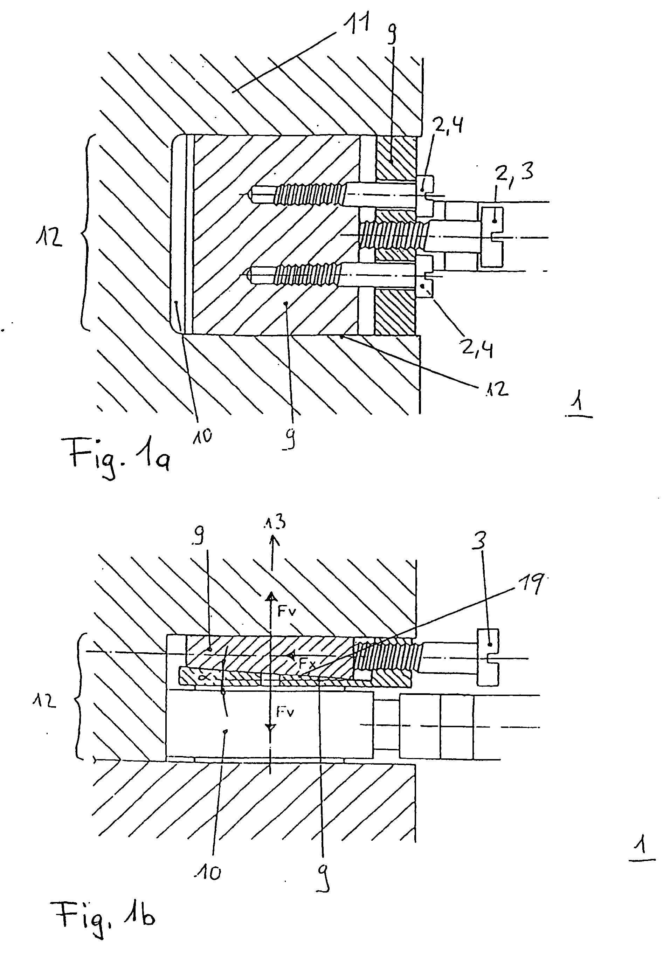

Der Stand der Technik ist in Fig. 1 dargestellt. Ein Sensor 10 ist in eine Aussparung 12 eines Maschinenteiles 11 unter Vorspannung untergebracht. Dieses Vorspannelement 1 besteht im Wesentlichen aus zwei Keilen 9 desselben Winkels, wobei der eine mit dem Sensor 10 verbunden ist und der andere entgegengesetzt zum ersten ausgerichtet ist und den restlichen Platz zwischen dem ersten Keil und dem inneren Rand der Aussparung 12 ausfüllt. Eine Schraubvorrichtung 2 erlaubt eine Verschiebung der beiden Keile 9 auf ihren schrägen Flächen 19 zueinander, wodurch sich der durch die Keile 9 eingenommene Platz in Vorspannrichtung 13 verändert Durch die Bedienung einer zentralen Schraube 3 lässt sich der Sensor 10 somit unter Vorspannung bringen, durch zwei weitere Schrauben 4, die seitlich von der ersten Schraube 3 angebracht sind, lässt sich die Vorspannung wieder lösen.

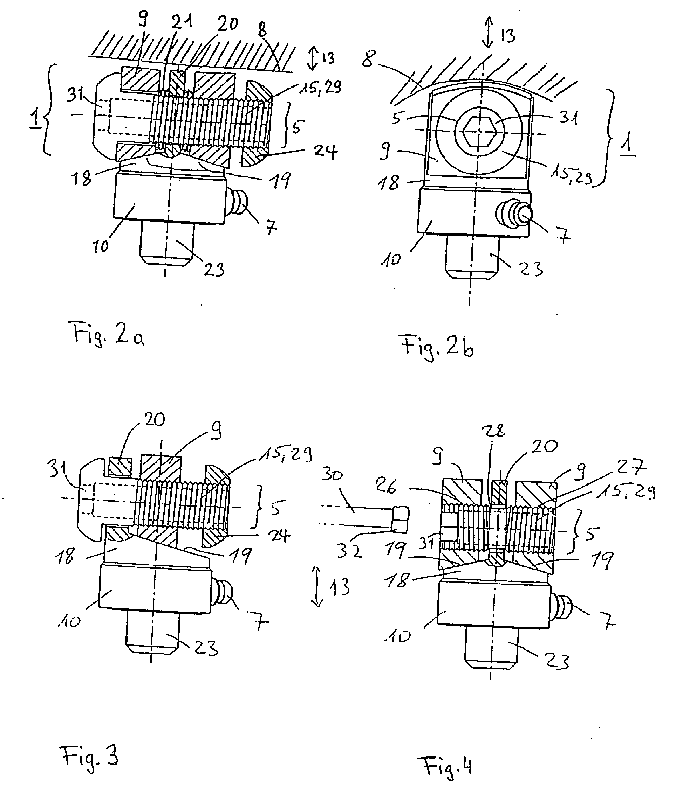

Fig. 2 zeigt ein erfindungsgemässes Ausführungsbeispiel eines Vorspannelementes 1 mit einem Sensor 10 in zwei verschiedenen Perspektive. Der Sensor 10 kann dabei im Vorspannelement 1 integriert oder separierbar mit diesem verbunden sein. Das Vorspannelement 1 umfasst einen Sockel 18 mit mindestens einer, vorzugsweise zwei Keilflächen 19 und einer Halteplatte 20, die fest mit dem Sockel 18 verbunden ist. Weiter kann der Sensor 10 mit einem Bolzen 23 versehen sein, der ein Einsetzen in eine entsprechende Bohrung ermöglicht. Der Sensor 10 verfügt über einen Stecker 7 zur Befestigung eines Kabels zur Signalabnahme.

Auf jeder Keilfläche 19 des Sockels 18 ist ein Klemmelement 9 angeordnet, das eine parallele Fläche zur Halteplatte 20 und eine im gleichen Mass wie die Keilfläche 19 abgeschrägte Fläche in Richtung zum Sockel 18 aufweist. Der zur Oberfläche des Maschinenteils 8 hin gerichtete Rand der Keilelemente 9 kann, vorteilhafterweise mindestens teilweise, jede Form der Aussparung aufweisen, in die das Vorspannelement 1 eingeführt werden soll, insbesondere flach oder in der Form eines Kreissegmentes.

Sowohl die Halteplatte 20 wie auch die Klemmelemente 9 verfügen über eine im wesentlichen mittige Bohrung 5, durch die eine Spannschraube 15 eingefügt wird.

Diese Spannschraube 15 muss mindestens bis in das zweite Klemmelement 9 reichen. Wenn die Bohrung im zweiten Klemmelement 9 durchgehend ist, kann die Spannschraube 15 durch diese hindurchtreten und vorzugsweise mit einer Mutter 24 fixiert werden, die als Anschlag dient, um ein Herausnehmen der Spannschraube 15 zu verhindern. Mindestens eine, vorzugsweise zwei Federelemente 21 erzeugen jeweils einen Gegendruck von der Halteplatte 20 zu jedem Klemmelement 9. Durch das Anziehen der Spannschraube 15 wird jedes Klemmelement 9 entlang der Keilfläche 19 gegen die Halteplatte 20 und gegen die Oberfläche des Maschinenteils 8 verschoben. Im eingebauten Zustand wird dadurch ein Druck auf die Oberfläche des Maschinenteils 8 und gleichermassen auf den Sensor 10 ausgeübt. Beim Lösen der Schrauben sorgen die Federelemente 21 dafür, dass sich die Klemmelemente 9 den Keilflächen 19 entlang lösen.

Fig. 3 beschreibt eine alternative Ausführungsform eines erfindungsgemässen Vorspannelementes, welches einen Sockel 18 mit nur einer Keilfläche 19 umfasst. Eine Halteplatte 20 muss für das Aufbringen der Vorspannung fest mit dem Sockel 18 verbunden sein.

In dieser Ausführungsform ist lediglich ein Klemmelement 9 vorhanden, das mittels einer Spannschraube 15 gegen die Halteplatte 20 gezogen werden kann. Die Spannschraube 15 kann wie die Spannvorrichtung 2 in Fig. 1 im Klemmelement 9 enden oder, wenn die Bohrung in der Halteplatte 20 durchgehend ist, durch diese durchtreten. In diesem Fall könnte eine Mutter 24 am Ende der Spannschraube 15 angebracht sein. Beim Lösen der Vorspannung kann die Haftreibung des Klemmelementes 9 beispielsweise durch einen Schlag auf die Spannschraube 15 überwunden werden.

Die Fig. 4 zeigt wiederum ein Vorspannelement 1 mit zwei Klemmelementen 9. In diesem Ausführungsbeispiel verfügen die beiden Klemmelemente 9 über entgegengesetzte Gewinde, namentlich ein Linksgewinde 26 und ein Rechtsgewinde 27. Auch durch diese Anordnung lässt sich die Vorspannung anbringen und lösen, ohne dass ein Federelement vorhanden sein muss. Im Bereich der Halteplatte 20 wird eine Vorrichtung 28 angebracht, die eine translatorische Bewegung der Spannschraube 15 verhindert.

Dieselbe Spannschraube 15, die in Fig. 4 gezeichnet ist, gekennzeichnet durch ein Linksgewinde 26 und ein Rechtsgewinde 27, lässt sich auch in einer Ausführung gemäss Fig. 3 anwenden. Das Linksgewinde 26 greift in ein entsprechendes Gewinde im Bereich der Halteplatte 20, das Rechtsgewinde 27 in das Gewinde des Klemmelementes 9. In diesem Ausführungsbeispiel ist auch keine Vorrichtung 28 zur Verhinderung einer Translation der Spannschraube 15 notwendig.

Allen Beispielen der Figuren 2 bis 4 ist gemeinsam, dass die Vorspannung an einer einzigen Stelle am Vorspannelement 1 angebracht und gelöst werden kann und dass dieser Vorgang den Zugang aus nur einer Richtung erfordert. Diese Richtung verläuft quer zur Vorspannrichtung 13.

Daraus ergibt sich der Vorteil, dass die Oberfläche des Maschinenteils 8 nicht durchbrochen werden muss, um ein darin eingesetzte Vorspannelement zu bedienen (spannen oder lösen). Ein weiterer Vorteil besteht darin, dass die Bedienung auch dann gewährleistet ist, wenn sich das Vorspannelement 1 nicht unmittelbar an der Öffnung der Aussparung 12 befindet sondern weit im Innern in einer langen Öffnung des Maschinenteils 11. Eine solche Lage ermöglicht den Zugang aus nur einer Richtung. Ebenfalls gemeinsam ist diesen Ausführungsbeispielen der Figuren 2 bis 4, bei denen alle Klemmelemente 9 durchgehende Bohrungen aufweisen, die Möglichkeit, als Spannschraube 15 eine Hohlschraube 29 zu verwenden. Dieses Hohlschraube 29 verfügt erfindungsgemäss mindestens teilweise über eine innere Angriffsvorrichtung 31 für ein Werkzeug 30, beispielsweise für einen Innensechskant. Der Teil der Hohlschraube 29, der nicht über diese Angriffsvorrichtung 31 verfügt, muss eine mindestens so grosse innere Öffnung aufweisen, dass ein Werkzeug 30, das an seinem Ende eine zur Angriffsvorrichtung 31 passende Struktur 32 aufweist, die Hohlschraube 29 durchtreten kann.

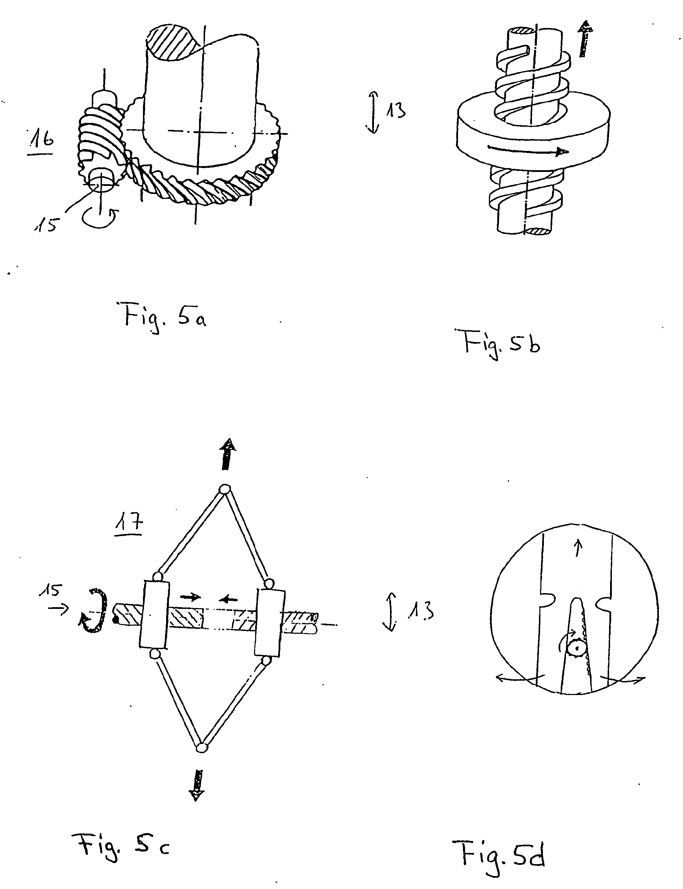

Wie in Fig. 5 dargestellt können alternative Ausführungsformen leicht ausgedacht werden, die ebenfalls das Merkmal aufweisen, dass die Vorspannung einzig durch eine Spannschraube 15 angebracht und gelöst wird und dass diese Bewegung aus einer einzigen Richtung erfolgt, die quer zur Vorspannrichtung 13 verläuft. Die Vorspannung kann beispielsweise, wie in Figuren 5a und 5b dargestellt, durch eine Spindelmutter 16 erfolgen. Fig. 5c zeigt ein Schersystem 17. Dieses Prinzip ist in Gestalt eines Wagenhebers bekannt. Fig. 5d zeigt das Prinzip eines Spreizkegels. Mit allen diesen Prinzipien lassen sich ebenfalls Vorspannelemente bauen, die eine Vorspannung einzig mittels einer Schraube anbringt oder löst, wobei der Zugang zum Ausführen dieser Bewegung aus einer einzigen Richtung erfolgt, die quer zur Vorspannrichtung 13 verläuft. Alternative Mechanismen sind auch hydraulische Systeme oder Systeme mittels Piezoaktuatoren.

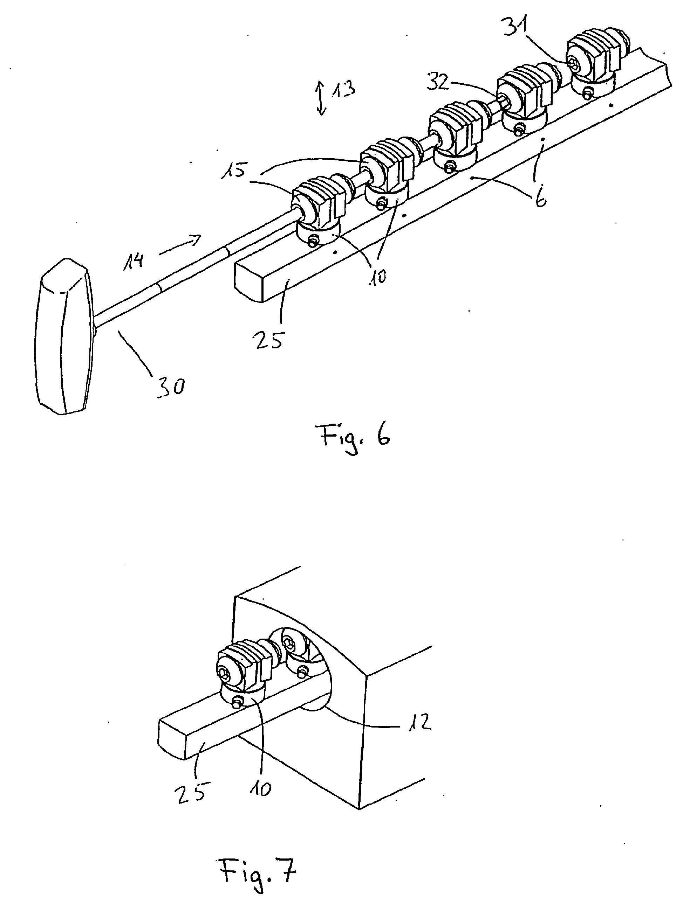

Eine weitere Anwendung ist in Fig. 6 dargestellt. Bei dieser Ausführung werden eine oder mehrere Sensoren 10 auf eine geeignete Leiste 25 gebracht, beispielsweise mittels den Bolzen 23 in dafür vorgesehene Bohrungen. Zusätzlich können die Bolzen 23 mit einer kleinen Klemmschraube 6 von der Seite der Leiste befestigt werden. Die Kabel der einzelnen Sensoren können gebündelt seitlich der Sensoren verlegt werden (nicht dargestellt).

Für diese Anordnung ist es von Vorteil, wenn alle Spannschrauben 15 zentral durchbohrt sind und mindestens teilweise eine Angriffsvorrichtung 31 für ein Werkzeug aufweisen. Ein passendes Werkzeug 30 weist an seinem Ende eine zur Angriffsvorrichtung 31 passende Struktur 32 auf, beispielsweise für einen Sechskantschlüssel. Die Passung darf insgesamt nicht grösser sein als die Durchbohrung. Der Schlüssel 30, beispielsweise ein Sechskantschlüssel von mindestens der Länge der mit Sensoren 10 bestückte Leiste 25 und einer dafür geeigneten Torsionsfestigkeit, kann durch alle Sensoren 10 hindurch geführt werden. Der Schlüssel 30 bedient sämtliche Sensoren aus einer einzigen Zugangsrichtung 14, quer zur Vorspannrichtung 13.

Fig. 7 zeigt eine erfindungsgemässe bestückte Leiste 25 während des Einbauens. Die mit den Sensoren 10 bestückte und dem Schlüssel 30 versehenen Leiste 25 kann in eine Aussparung 12 geeigneter Form eingefügt werden. Für das Anbringen der Vorspannung wird mit dem Schlüssel 30 der hinterste Sensor 10 zuerst verspannt. Durch Herausziehen des Schlüssels um jeweils den Abstand zweier benachbarter Sensoren 10 kann die nächste Spannschraube 15 erreicht und verspannt werden, bis alle Sensoren 10 vorgespannt sind. Eine entsprechende Markierung auf dem Schlüssel im Abstand der Sensoren 10 ist hilfreich.

Eine Walze kann von beiden Stirnseiten her mit mehreren solchen Leisten versehen werden, um mit einem Schlüssel 30 auszukommen, der nur über eine Länge der halben Walzenlänge verfügt. Erfahrungen zeigen gute Resultate mit Schlüsseln von bis zu 1.5 m Länge bei einer Schraubengrösse von 6-8 mm. Bei längeren Schlüsseln müssen die Schrauben entsprechend vergrössert werden, um die gewünschte Torsionsfestigkeit des Schlüssels zu erreichen.

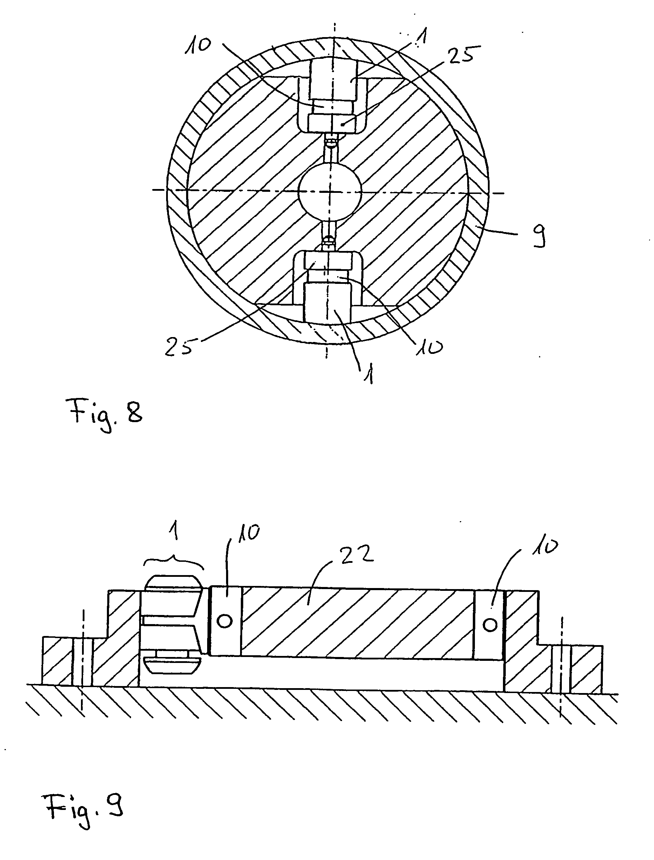

Wie in Fig. 8 dargestellt kann ein Maschinenteil 9, beispielweise eine Walze, mit den besteckten Leisten 25 genau gegenüberliegend versehen werden. Bei der Anordnung können jeweils zwei sich gegenüberliegende Sensoren 10 gemeinsam ausgewertet werden, um temperaturgegebene Änderungen der Vorspannung zu kompensieren. Dazu werden die Sensorpaare entgegengesetzt ausgerichtet eingebaut.

Ein zusätzlicher Vorteil einer Verspannkomponente mit zwei Klemmelementen im Gegensatz zu nur einem Klemmkeil aus dem Stand der Technik liegt darin, dass keine Scherkraft auf den Sensor ausgeübt wird, weil die beim Vorspannvorgang auftretenden Reibkräfte symmetrisch gegeneinander wirken und keine resultierende Komponente in Axialrichtung bewirken. Ein weiterer Vorteil in der erfindungsgemässen Ausführung liegt in der Handhabung des Spannens und Lösens der einzelnen Sensoren, da dazu nur ein einziger zentral durchführbarer Schlüssel notwendig ist.

Ein weiterer Vorteil dieser Erfindung besteht darin, dass die Sensoren in eingebauten Zustand verspannt werden können. Bei sogenannten "Weight in Motion" oder WIM Sensoren beispielsweise, die das Gewicht von vorbeifahrenden Fahrzeugen auf den Strassen messen und in den Strassen eingebaut sind, werden die Sensoren vorgespannt, bevor die mit Sensoren bestückte Leiste verbaut wird. Für viele Anwendungen ist dies aber nicht möglich.

Abwandlungen dieser Vorrichtung sind leicht zu finden. So kann die Spannschraube 15 beispielsweise im hinteren Klemmelement drehbar aber zug- und druckfest befestigt sein und im vorderen Klemmelement mittels eines Innengewindes verstellt werden. Die Schlüsselpassung kann über einen Teil der Spannschraube oder über die gesamte Länge verlaufen. Diese Anordnung verfügt über keine Feder, da die Klemmteile auch druckfest miteinander verschraubt sind. Andererseits ist eine Vorrichtung 28 zur Verhinderung einer Translationsbewegung der Spannschraube 15 von Vorteil. Solche Anordnungen gewährleisten auch ein Lösen der Vorspannung, wenn sich diese mit der Zeit gefestigt hat, beispielsweise durch Korrosion. Die Struktur 32 am Schlüsselende kann von beiden Seiten her auf die Angriffsvorrichtung 31 angreifen, indem der Schlüssel zwischen zwei passenden Stellungen aufgesetzt wird. Dadurch kann durch Druck oder Zug zusätzlich Kraft auf die Spannschraube 15 zum Lösen der Klemmelemente 9 aufgebracht werden.

Weitere Modifikationen sind sich leicht auszudenken. Die hier genannten Beispiele sollen in keiner Weise einschränkend gedeutet werden.

In der Anordnung der Fig. 9 werden zwei Sensoren 10 beidseitig einer Basisplatte 22, einer Aufspannplatte oder eines Werkstückes mit einem erfindungsgemässen Vorspannelement 1 verspannt. Zu beachten ist, dass lediglich ein Vorspannelement 1 für die Vorspannung von zwei Sensoren 10 verwendet wird. Bei einer Montage der beiden Sensoren 10 in entgegengesetzter Richtung lassen sich temperaturbedingte Vorspannungsänderungen kompensieren.

Als Sensoren können, abgesehen von Kraftsensoren auch Sensoren zum Messen von Druck- und/oder Momenten verwendet werden, die unter Vorspannung gebracht werden müssen.

### Liste der Bezeichnungen

- 1.: Vorspannelement
- 2.: Schraubvorrichtung
- 3.: zentralen Schraube zum Spannen des Keils
- 4.: Schrauben, zum Lösen des Keils
- 5.: zentrale Bohrung
- 6.: Klemmschraube von der Seite
- 7.: Stecker
- 8.: Oberfläche des Maschinenteiles
- 9.: Klemmelement, Keil
- 10.: Sensor
- 11.: Struktur, Maschinenteil
- 12.: Aussparung
- 13.: Vorspannrichtung
- 14.: Zugangsrichtung (Richtung quer zur Vorspannrichtung)
- 15.: Spannschraube
- 16.: Spindelmutter
- 17.: Schersystem
- 18.: Sockel
- 19.: Keilfläche, keilförmige Ebene
- 20.: Halteplatte
- 21.: Federelement
- 22.: Basisplatte oder Werkstück
- 23.: Bolzen
- 24.: Mutter
- 25.: Leiste (Schiene)
- 26.: Linksgewinde
- 27.: Rechtsgewinde
- 28.: Vorrichtung zur Verhinderung der Translation, Anschlag
- 29.: Hohlschraube
- 30.: Schlüssel (Werkzeug)
- 31.: Angriffsvorrichtung
- 32.: Zur Angriffsvorrichtung passende Struktur

## Patentansprüche

1. Vorspannelenlent (1) zum Anbringen einer Vorspannung auf einen Sensor(10) in eingebautem Zustand zwischen Strukturen oder in einer Aussparung einer Struktur (11), **dadurch gekennzeichnet, dass** das Aufbringen und das Gewährleisten zum Lösen der Vorspannung an derselben Stelle und aus einer Richtung quer zur Vorspannrichtung (13) vorgenommen werden kann, wobei das Aufbringen und das Lösen der Vorspannung durch eine Drehbewegung vorgenommen wird, und wobei das Aufbringen und das Lösen der Vorspannung an einer Spannschraube (15) angreift, die mindestens eine Halteplatte (20) durchdringe, die fest mit dem Vorspannelement verbunden ist, und wobei ein oder zwei Klemmelemente (9) durch eine Drehung der Spannschraube (15) in Vorspannrichtung (13) bewegt werden können.

2. Vorspannelement gemäss Anspruch 1, **dadurch gekennzeichnet, dass** das Vorspannelement mit dem Sensor (10) eine Einheit bildet.

3. Vorspannelement gemäss Anspruch 1 oder 2, **dadurch gekennzeichnet, dass** die ein oder zwei Klemmelemente (9) durch eine Drehung der Spannschraube (15) auf keilförmigen Ebenen bewegt werden können.

4. Vorspannelement nach einem der vorhergehenden Ansprüche, **dadurch gekennzeichnet, dass** die ein oder zwei Klemmelemente (9) von der Spannschraube (15) mindestens teilweise durchdrungen werden.

5. Vorspannelement nach einem der vorhergehenden Ansprüche, **dadurch gekennzeichnet, dass** die ein oder zwei Klemmelemente (9) durch eine Drehung der Spannschraube (15) auch in Zugangsrichtung (14) bewegt werden können.

6. Vorspannelement gemäss Anspruch 1 oder 2, **dadurch gekennzeichnet, dass** die vorspannung mittels einer SpindelMutter (16) oder eines Schersystems (17) vorgenommen wird.

7. Vorspannelemente gemäss Anspruch 5, **dadurch gekennzeichnet, dass** mindestens ein Federelement (21) zwischen jedem Klemmelement (9) und der Halteplatte (20) in Zugangsrichtung (14) wirkt um das Lösen der Verspannung zu unterstützen.

8. Vorspannelement gemäs einem der Ansprüche 1-5, **dadurch gekennzeichnet, dass** das Vorspannelement genau ein Klemmelement (9) umfasst.

9. Vorspannelement gemäss Anspruch 8, **dadurch gekennzeichnet, dass** die Spannschraube (15) ein passiges Gewinde im Bereich der Halteplatte (27) und ein passiges Gewinde in entgegengesetzter Richtung (26) (Linksgewinde) tm Bereich des Klemmelements (9) aufweist.

10. Vorspannelement gemäss einem der Ansprüche 1-5 mit zwei Klemmelementen (9), **dadurch gekennzeichnet, dass** die Spannschraube (15) ein passiges Gewinde (26) (Linksgewinde) in Bereich, des ersten Klemmelements (9), ein passiges Gewinde in entgegengesetzter Richtung (27) (Rechtsgewinde) im Bereich des zweiten Klemmelementes (9) und eine Vorrichtung (28) zur verhinderung einer Translationahawegung mittig im Bereich der Halteplatte (20) aufweist.

11. Vorspannelement gemäss einem der Ansprüche 1, 7, 8, 9 oder 10, dadurch gekennzeichet, dass die Spannschraube (15) eine Hohlschraube (29) ist, durch die ein Werkzeug (30) durchtreten kann und die inwandig mindestens teil - weise über eine passige Angriffsvorrichtung (31) für das Werkzeug (30) verfügt.

12. Anordnung von zwei oder mehreren Vorspannelementen mit Sensoren gemäss Anspruch 1, oder 11 in einer Reihe, vorzugsweise auf einer Leiste (25), **dadurch gekennzeichnet, dass** alle vorspannelemente (1) derart ausgerichtet sind, dass alle Richtungen zum Aufbringen und Lösen der Vorspannungen aller Vorspannelement auf der selben Achse liegen.

13. Anordnung gemäss Anspruch 12, **dadurch gekennzeichnet, dass** das Vorspannen und das Lösen aller Vorspannelemente (1) mittels desselben Werkzeuges (30) individuell vorgenommen werden kann.

14. Anordnung gemäss Anspruch 12 oder 13, **dadurch gekennzeichnet, dass** mehrere Leisten (25) von Sensoren (10) in derselben Struktur (11) eingebaut sind.

15. Anordnung gemäss Anspruch 14, **dadurch gekennzeichnet, dass** jeweils zwei sich gegenüberliegende Sensoren (10) derart ausgerichtet sind, dass eine Vorspannänderung kompensiert wird.

## Claims

1. A preloading element (1) for applying a preload onto a sensor (10) in a built-in state between structures or in a recess of a structure (11) **characterized in that** applying and ensuring the release of the preload can be performed at the same site and from a direction transversal to the preloading direction (13) wherein said applying and releasing of the preload is done by a rotary motion and wherein said applying and releasing of the preload engages a clamp screw (15) extending through at least a holding plate (20) which is firmly secured to the preloading element and wherein one or two clamping elements (9) can be moved by a rotation of the clamp screw (15) in the preloading direction (13).

2. A preloading element according to claim 1 **characterized in that** the preloading element is integral with the sensor (10).

3. A preloading element according to claim 1 or 2 **characterized in that** said one or two clamping elements (9) can be moved along wedge-shaped planes by a rotation of the clamp screw (15).

4. A preloading element according to any of the preceding claims **characterized in that** said clamp screw (15) extends at least partially through the one or two clamping elements (9).

5. A preloading element according to any of the preceding claims **characterized in that** said one or two clamping elements (9) can be moved also in access direction (14) by a rotation of the clamp screw (15).

6. A preloading element according to claim 1 or 2 **characterized in that** the preload is applied by means of a spindle nut (16) or a shear system (11).

7. A preloading element according to claim 5 **characterized in that** at least one spring element (21) acts between each clamping element (9) and the holding plate (20) in access direction (14) to aid in releasing the preload.

8. A preloading element according to any of the claims 1-5 **characterized in that** the preloading element comprises exactly one clamping element (9).

9. A preloading element according to claim 8 **characterized in that** said clamp screw (15) has a fitting thread in the area of the holding plate (27) and a fitting thread in the opposite direction (26) (left-handed thread) in the area of the clamping element (9).

10. A preloading element according to any of the claims 1-5 having two clamping elements (9) **characterized in that** said clamp screw (15) has a fitting thread (26) (left-handed thread) in the area of the first clamping element (9), a fitting thread in the opposite direction (27) (right-handed thread) in the area of the second clamping element (9) and a means (28) to prevent a translational movement centrally in the area of the holding plate (20).

11. A preloading element according to any of the claims 1, 7, 8, 9, or 10 **characterized in that** said clamp screw (15) is a hollow screw (29) through which a tool (30) can pass and which on its inner wall is at least partially provided with a fitting engagement means (31) for the tool (30).

12. An assembly of two or more preloading elements with sensors according to claim 1 or 11 disposed in a row, preferably on a board (25), **characterized in that** all said preloading elements (1) are arranged in a manner that all directions for applying and releasing the preloads of all preloading elements are on the same axis.

13. An assembly according to claim 12 **characterized in that** said preloading and releasing of each of the preloading elements (1) can be performed individually using the same tool (30).

14. An assembly according to claim 12 or 13 **characterized in that** several boards (25) of sensors (10) are mounted within the same structure (11).

15. An assembly according to claim 14 **characterized in that** each two opposing sensors (10) are orientated in a manner to compensate for a variation in preload.

## Revendications

1. Un élément de précontrainte (1) pour l'application d'une précontrainte sur un capteur (10) dans l'état monté entre des structures ou dans un évidement d'une structure (11), **caractérisé en ce que** l'application et assurer la libération de la précontrainte peuvent être effectués à la même position et d'une direction en travers à la direction de la précontrainte (13) dans lequel ladite application et ladite libération de la précontrainte sont effectuées par un mouvement rotatif et ladite application et ladite libération de la précontrainte agissent par une vis de serrage (15) passant au travers d'une plaque de support (20) arrêtée fermement à l'élément de précontrainte et dans lequel une rotation de la vis de serrage (15) dans la direction de précontrainte (13) fait mouvoir l'un ou les deux éléments de serrage (9).

2. un élément de précontrainte selon la revendication 1 **caractérisé en ce que** l'élément de précontrainte est d'un seul tenant avec le capteur (10).

3. Un élément de précontrainte selon la revendication 1 ou 2 **caractérisé en ce que** l'un élément ou les deux éléments de serrage (9) peuvent être mus sur des plans cunéiformes par rotation de la vis de serrage (15).

4. Un élément de précontrainte selon une des revendications précédentes **caractérisé en ce que** la vis de serrage (15) passe au moins partiellement au travers de l'élément ou des deux éléments de serrage (9).

5. Un élément de précontrainte selon une des revendication précédentes **caractérisé en ce que** l'un élément ou les deux éléments de serrage (9) en outre peuvent être mus dans la direction d'accès (14) par une rotation de la vis de serrage (15).

6. Un élément de précontrainte selon la revendication 1 ou 2 **caractérisé en ce que** la précontrainte est appliquée à l'aide d'un écrou de broche (16) ou d'un système de cisaillement (17).

7. un élément de précontrainte selon la revendication 5 **caractérisé en ce qu'**au moins un élément de ressort (21) agit entre chacun élément de serrage (9) et la plaque de support (20) dans la direction d'accès (14) pour contribuer à la libération de la précontrainte.

8. Un élément de précontrainte selon une des revendications 1-5 **caractérisé en ce que** l'élément de précontrainte comprend précisément un élément de serrage (9).

9. Un élément de précontrainte selon la revendication 8 **caractérise en ce que** la vis de serrage (15) a un filetage adapté dans la région de la plaque de support (27) et un filetage adapté dans la direction opposée (26) (filetage gauge) dans la région de l'élément de serrage (9).

10. Un élément de précontrainte selon une des revendications 1-5 ayant deux éléments de serrage (9) **caractérisé en ce que** la vis de serrage (15) a un filetage adapté (26) (filetage gauge) dans la région de l'élément de serrage premier (9), un filetage adapté dans la direction opposée (27) (filetage droit) dans la région de l'élément de serrage deuxième (9) et un moyen (28) pour prévenir un mouvement de translation centrique dans la région de la plaque de support (20).

11. Un élément de précontrainte selon une des revendications 1, 7, 8, 9 ou 10 **caractérisé en ce que** la vis de serrage (15) et une vis creuse (29) apte à la passage d'un outil (30) et prévue dans sa paroi interne au moins partiellement avec un moyen de engrènement adapté (31) à l'outil (30).

12. un arrangement de deux ou plusieurs éléments de précontrainte avec des capteurs selon la revendication 1 ou 11 situés en série, préférentiellement sur un bloc (25), **caractérisé en ce que** tous les éléments de précontrainte (1) sont arrangés de sorte que tous les directions pour l'application et la libération des précontraintes de tous les éléments de précontrainte sont dans la même axe.

13. Un arrangement selon la revendication 12 **caractérisé en ce que** la précontrainte et la libération de chacun des éléments de précontrainte (1) peuvent être effectuées individuellement à l'aide du même outil (30).

14. Un arrangement selon la revendication 12 ou 13 **caractérisé en ce que** plusieurs blocs (25) des capteurs (10) sont montés dans la même structure (11).

15. Un arrangement selon la revendication 14 **caractérisé en ce qu'**en chaque cas deux capteurs (10) opposés l'un à l'autre sont orientés de sorte qu'ils compensent une variation de la précontrainte.
